# EUROPEAN PATENT SPECIFICATION

(11) **EP 1 517 614 B1**
(45) Date of publication and mention of the grant of the patent: **30.12.2009**
(21) Application number: 03740280.7
(22) Date of filing: 19.06.2003
(51) Int. Cl.: A23F 3/14

(54) **TEA MANUFACTURE**
TEE HERSTELLUNG
FABRICATION DE THE

(30) Priority: 28.06.2002 GB 0215067
(43) Date of publication of application: 30.03.2005
(73) Proprietor: Unilever PLC, London EC4Y 0DY (GB); Unilever N.V., 3013 AL Rotterdam (NL)
(72) Inventor: HOLMES, Joanne Mary, Dorchester, Dorset DT2 9NB (GB); NOBLE, Ian, Bedford, Bedfordshire MK44 1LQ (GB)
(74) Representative: Rosen Jacobson, Frans Lucas M.
(86) International application number: PCT/EP2003/006455
(87) International publication number: WO 2004/002235

(56) References cited:
- EP-A- 0 910 956
- GB-A- 1 251 079
- GB-A- 1 428 394
- BOCKUCHAVA M: "Use of green instant tea to enrich different varieties of tea" CHEMICAL ABSTRACTS + INDEXES, AMERICAN CHEMICAL SOCIETY. COLUMBUS, US, vol. 3, no. 85, 1976, XP002089135 ISSN: 0009-2258
- DATABASE WPI Section Ch, Week 198416 Derwent Publications Ltd., London, GB; Class D13, AN 1984-097618 XP002257658 & JP 59 042846 A (KATO K), 9 March 1984 (1984-03-09) & PATENT ABSTRACTS OF JAPAN vol. 008, no. 130 (C-229), 16 June 1984 (1984-06-16) & JP 59 042846 A
- PATENT ABSTRACTS OF JAPAN vol. 011, no. 043 (C-402), 7 February 1987 (1987-02-07) & JP 61 209548 A (MARUON YAGIOTOZOU SHOTEN:GOUSHI), 17 September 1986 (1986-09-17) cited in the application

## Description

The present invention relates to a method for making a fabricated tea product by coating leaf tea with tea solids.

### Background and prior art

Tea is generally prepared as green leaf tea or black leaf tea.
The method of preparing such teas is well known to those skilled in the art. Generally, to prepare black leaf tea, fresh green leaves of the plant *Camellia sinensis* are withered (subjected to mild drying), comminuted, fermented (in which process enzymes in the leaf tea use atmospheric oxygen to oxidise various substrates to produce brown-coloured products) and then fired (to dry the tea leaves). Green leaf tea is not exposed to the fermentation process. Partial fermentation may be used to produce intermediate-type teas known as "oolong" tea.

Leaf teas, of whatever type, are normally constrained in terms of their properties by the location of their production, which usually limits the choice of tea varieties, agronomy and the manufacturing process used.

Today tea based beverages can be prepared by methods other than infusing leaves in hot water and served in ways other than poured from tea pots. For example they can be made with concentrates or powders that are mixed with hot water in vending machines or used to prepare ready to drink teas in cans and bottles. Consumers also demand more from tea such as accelerated infusion, more colour, more aroma.

There is therefore a need for a method for making a leaf tea product that allows one to tailor the physico-chemical properties of the final product to the customer's requirements after manufacture on a tea plantation and, if necessary break traditional rules of tea manufacture to delivering teas with specific properties, modified flavour attributes or for specific product applications.

United Kingdom patent specification GB 1428394 (Unilever) describes a method of making a tea product which comprises spraying cold water onto a mixture of cheap black leaf tea and conventional instant tea powder in an amount of from 2 to 15% by weight of the unwetted mixture and drying the wetted mixture in a separate step to give a free-flowing conglomerate of black leaf tea and hot-water soluble solids of fermented tea. The method allowed value to be added to the cheap black tea. The product was said to be suitable for use in tea bags or leaf-based tea vending machines. Unfortunately such a product however is not suitable for providing high quality infusions. The rate at which the product infused was also undesirably slow for use in an out of home environment such as in a vending machine or tea shop brewing equipment.

European patent specification EP 910956 (Nestlé) discloses a tea bag for making iced tea that contains a mixture of 30 to 95% by weight of tea leaves and 5 to 70% by weight of dried soluble tea solids. This bag can apparently be immersed in cold water and yield a tea beverage of acceptable colour and flavour in less than 10 minutes. In one embodiment the dried soluble tea powder is coated on to the tea leaves by spraying a tea concentrate on to tea leaves and then transferring the wet tea leaves to a fluidised bed drier.

Japanese patent specification JP 61209548 (Maruon Yagiotozou Shoten Goushi) describes a method for making a leaf tea that apparently provides excellent taste and flavour with repeated brewing. The method involves moistening tea leaves, mixing the moistened leaves with powdered Matcha tea, spraying an aqueous solution of an edible material such as starch to fix the mixture and drying the mixture to give the desired product.

United States patent specification US 4076847 (Thomas J Lipton Inc) discloses flavour granules that are coated on the outer surface with a powdered beverage such as tea, cocoa or coffee by granulation or spray drying. Water of gum acacia can be used as a binder. The granules can be dissolved in water to make flavoured tea, cocoa or coffee. US 4076847 also discloses packaging tea powder coated flavour granules with broken leaf tea in a tea bag.

However none of these methods provides a product that meets with the applicants' requirements for quality and speed of infusion.

### Statement of the Invention

The present invention provides a method for preparing a fabricated leaf tea product comprising mixing leaf tea with tea solids derived from tea powders, the method being **characterised in that** the mixture of tea leaves and tea powder is simultaneously wetted, and dried.

By carefully choosing the leaf tea and the tea powder one can tailor the physico-chemical properties of the final product to the customer's requirements after manufacture on a tea plantation.

The leaf tea is selected to give the required infusion characteristics in the tea beverage and may be chosen from green or black teas. The leaf tea preferably comprises a blend of teas. The teas to be blended will be selected by expert tea tasters as is well known in the art of producing leaf teas.

The amount of tea powder used is preferably 10% to 75% by weight of the amount of leaf tea. The fabricated tea product is preferably dried to 3 to 8% (preferably about 5%) moisture.

"Tea" for the purposes of the present invention means leaf material from *Camellia sinensis var. sinensis* or *Camellia sinensis var. assamica.* It also includes rooibos tea obtained from *Aspalathus linearis* however that is a poor source of endogenous fermenting enzymes. "Tea" is also intended to include the product of blending two or more of any of these teas.

"Leaf tea" for the purposes of this invention means plant material derived from a tea plant in an uninfused form.

"Tea powder" for the purposed of this invention means a product prepared by extracting tea material into water from leaf teas e.g. green, oolong and/or black teas and then subsequently concentrating and drying the infusion to give a powder"

For the avoidance of doubt the word "comprising" is intended to mean including but not necessarily "consisting of" or "composed of". In other words the listed steps or options need not be exhaustive.

Except in the operating and comparative examples, or where otherwise explicitly indicated, all numbers in this description indicating amounts or concentrations of material ought to be understood as modified by the word "about".

### Brief description of the drawings

Figure 1 is a graph of the results of the comparative infusion test carried out at 80 °C given in Table 3 obtained by the method described in Example 4.
Figure 2 is a graph of the results of the comparative infusion test carried out at 90 °C given in Table 4 obtained by the method described in Example 4.

### Detailed description of the invention

The fabricated tea product of the present invention is made by mixing a leaf tea with a tea powder and simultaneously wetting and drying the resulting mixture.

Black leaf teas, particularly those with high characteristic aromas are selected from the desired tea producing countries and blended together. One might also select the tea on the basis of leaf shape and/or leaf size. Green and oolong tea may also be used provided that these materials are processed in the correct manner to preserve the desired qualities of these teas.

Tea powders are made by removing the water from aqueous tea infusions. Tea infusions suitable for use in the method of this invention may be prepared from black teas, which produce highly coloured infusions, although green and oolong teas may also be used if appropriate care is taken to ensure preservation of the desired quality attributes. These tea infusions may be prepared using either a simple extraction process or an enzymatically assisted extraction process

The leaf teas for powder preparation are preferably combined with water in an extractor at the desired temperature to obtain a tea infusion slurry containing extracted tea material and solid tea material. After infusion the solid tea material is separated from the tea infusion for example by filtration and/or centrifugation.

Enzymatically assisted extraction, if used, requires the addition of enzymes to the extractor in the form of an enzyme cocktail or the enzymes can be fed to the extractor individually. For example, an enzyme cocktail including selected cell wall lysis enzymes such as carbohydrases including cellulase and mascerase, for example, Viscozyme L^{™} obtainable from NOVO Industri A/S Denmark may be used. The tea slurry containing the enzymes is then hot extracted to complete the infusion process and the solid tea materialis separated from the tea extract as above. The tea extract is then preferably pasteurised to deactivate the enzymes.

The resulting tea infusion is then optionally concentrated and then cooled and polished by centrifugation or other clarification methods such as filtration and the like. After polishing, the extract is then concentrated for example by vacuum concentration or by falling film type evaporation and dried for example by spray drying to give tea powder for use in the present invention.

The leaf tea can be mixed with the tea powder using any art-known method. The present inventors have found that leaf tea is preferably mixed with the tea powder in a pneumatically fluidised bed. The simultaneous wetting and drying of the mixture of leaf tea and tea powder may then also take place in the same fluidised bed. This process produces a fabricated tea product comparable in appearance and stability to conventional leaf teas but which permits a rapid release of the tea components present in the tea powder. This rapid release provides body, colour and some flavour attributes to the infusion. If the leaf tea onto which the tea powder is applied is or comprises a high aroma leaf tea this may provide a stable source of the aroma components to balance the flavour, ensuring the delivery of a full, rounded beverage with the taste of the standard cup of tea, in approximately half of the time required currently by consumers.

In one embodiment of the present invention the preferred leaf tea or blend of leaf teas and the tea powder are added to a pneumatically or mechanically fluidised bed apparatus. The mixture is then fluidised to a state where it may be described as a fully expanded bed ensuring continual motion of the individual tea particles. Hot water is then sprayed into the fluidised bed and a heated air stream is passed through the fluidised bed simultaneously drying the coated tea leaves. The bed temperature during this process is preferably maintained at 20 to 50°C, preferably 35°C. The fluidisation process continues until coated leaf tea has been dried to 3 to 8% moisture content, preferably about 5%. The amount of tea powder is preferably between 10 and 75% of the mass of the leaf tea or leaf tea blend..

Infusions prepared from the fabricated tea products of the present invention give infusions similar to those obtained by infusing normal leaf teas but with much shorter infusion times. The fabricated tea products are particularly suited for use in tea making machines such as those described in the present applicants European patent EP 1020152 and our international publication WO 02/43540. In the case of a fabricated tea product specifically prepared for use in such machines, a tea liquor may be produced which gives an infusion, closely resembling an infusion prepared in a manner regularly used by consumers but within half the time. In order to achieve the goal of a vending tea producing a normal consumer infusion within approximately half the time, a combination of high quality leaf teas are preferably combined with a tea concentrate prepared from lower quality black leaf teas

Beverage dispensing machines operating in workplaces and public spaces typically have a water temperature of between 80 and 90°C and an infusion time of 10-15 seconds. The fabricated tea product of the present invention gives an infusion under these conditions with a quality normally associated with infusions made in the more traditional way with boiling water and longer infusion times.
This quality delivery is surprising and novel compared to both the current literature and existing commercial leaf tea products for use in dispensing machines.

The fabricated tea product described here has the unique advantage of being able to achieve the same level of delivery for a broad range of tea types i.e. black teas of African, Indian and Sri Lankan origin, green teas of Chinese, Japanese and Indonesian origin and also flavoured teas, may all be accelerated in this manner.

The fabricated tea product of the present invention may be placed inside a porous infusion package such as a teabag. The infusion package may be of such a size that it is intended to be used to prepare an infused tea product in a teapot or in the cup. Alternatively the tea bag may be larger and intended for use in tea making machines in catering establishments where larger volumes of tea beverages need to be prepared.

The invention shall now be described with reference the following illustrative examples.

### Example 1

### Leaf tea product fabricated from leaf and tea powder specially for use in dispensing machines

A black leaf tea blend was coated with a tea concentrate powder prepared from a coloury black tea blend.

The black tea concentrate, prepared without the use of enzymes was produced using a batch, aqueous extraction at a water to leaf ratio of 40 litres mineralised water at 90 °C and 5 kg of a blend of coloury black leaf teas, for 15 minutes. The resulting mixture of tea liquor and spent leaf tea was filtered to remove the spent leaf. The resulting tea liquor was then passed through a continuous centrifuge to remove all small leaf particles. The liquor was then concentrated in a falling film type evaporator at 50 °C under reduced pressure to a concentration of 50% solids.

The concentrate was subsequently spray dried.

The spray dried instant tea was then placed in a pneumatically fluidised bed with the leaf tea at the ratio 13.5 Kg instant tea and 86.5 Kg leaf tea blend, including Kenyan and Sri Lankan black teas. Water at a temperature of about 40°C was sprayed at a flow rate of approximately 1 litre per minute with a maintained bed temperature of 35 °C with an air supply temperature of 40 to 50°C controlled to ensure that the bed temperature was maintained at 35°C. The coating and drying process in the fluidised bed normally takes 35 to 40 minutes to ensure complete drying of the product to a moisture level of less than 5%.

### Example 2

In a similar way to that described in Example 1 a fabricated tea product was made using another tea powder

### Example A

### Comparative example

A tea product was prepared according to the method outlined in GB 1,428,394. 865g of the same leaf tea used in Example 1 and combining it with 135g of the same instant tea powder used in Example 1. These were combined in a small Hobart mixer and then 40g of cold water was sprayed onto the mixture whilst maintaining the mixer agitation. The resulting mixture was then placed in a laboratory scale fluidised bed dryer and dried using air at 50°C. The resulting product was glossy in appearance.

### Example 3 - Tea quality comparison

An expert tea taster assessed the liquor quality of samples of tea products made in accordance with the present invention (Examples 1 and 2), a sample made in accordance with the process of GB 1428394 (Example A) and a sample of a commercially available leaf tea for use in vending machines (PG Tips vending leaf tea).

To imitate the preparation of tea in the United Kingdom, 2.2g (± 0.05 g) tea was infused in 235 ml of freshly boiled tap water (Crawley, UK) for twenty seconds (static brew). The liquor was then tipped onto 10ml of semi-skimmed milk and an expert tea taster assessed the liquor quality with respect to taste (T), colour (C), brightness (B) and mouthfeel (M). Liquor quality was measured on a scale of from 0.6 to 9.4 as given in Table 1 above. The results are given in Table 2 below.

**TABLE 1**

| **Liquor quality assessment** | | |
|---|---|---|
| T - Taste | 0.6 (plain) | 9.4 (flavoury) |
| C - Colour | 0.6 (yellow) | 9.4 (red) |
| B - Brightness | 0.6 (dull) | 9.4 (bright) |
| M - Mouthfeel | 0.6 (thin) | 9.4 (thick) |

**TABLE 2**

| **Liquor quality assessment of milked infusions** | | | | |
|---|---|---|---|---|
| SAMPLE | T | C | B | M |
| Example 1 | 4.6 | 4.8 | 5.4 | 5.4 |
| Example 2 | 5.0 | 5.0 | 5.6 | 5.2 |
| Example A | 4.0 | 4.0 | 5.4 | 5.0 |
| Vending | 5.0 | 4.8 | 3.8 | 3.8 |

The expert taster found that the taste, colour and mouthfeel of the fabricated tea of Examples 1 and 2 were clearly superior to that of the tea product of Example A at the same preparation levels (grams of tea per 100ml of water). Additionally this test clearly shows the advantage of the tea products made by the method of the present invention over both conventional leaf teas and tea products prepared by the method described in GB 1428394.

### Example 4 - Infusion performance

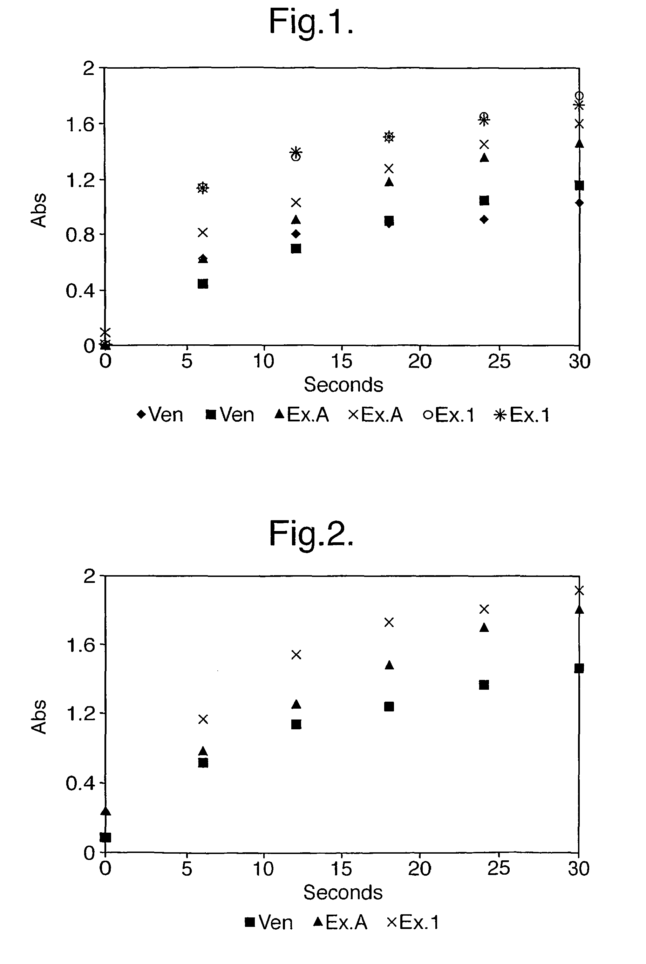

2.0 g of the fabricated tea product according to the present invention prepared as described in Example 1, 2.0 g of the tea product prepared according to Example A and 2.0 g of the commercially available vending leaf (PG tips vending leaf tea) were each infused (in duplicate) in 200 ml of deionised water in glass jacketed vessel held at 80 degrees C. A spectrophotometer was used to measure the absorbance of samples of the infusions at 445 nm over a thirty second period. 445 nm is a wavelength known to correlate with both extracted tea solids and consumer liking. The results are given in Table 3 below and Figure 1. In Figures 1 and 2 "Ven" represents the current vending leaf tea.

**Table 3**

| SAMPLE | Absorbance at 445 nm at time (sec) | | | | | |
|---|---|---|---|---|---|---|
| | 0 | 5 | 10 | 20 | 25 | 30 |
| Vending | -0.00 | 0.52 | 0.74 | 0.89 | 0.93 | 1.03 |
| Vending | -0.00 | 0.37 | 0.62 | 0.96 | 1.07 | 1.16 |
| Example A | 0.01 | 0.52 | 0.81 | 1.24 | 1.38 | 1.48 |
| Example A | -0.04 | 0.68 | 0.96 | 1.34 | 1.48 | 1.62 |
| Example 1 | -0.00 | 0.95 | 1.29 | 1.56 | 1.68 | 1.81 |
| Example 1 | 0.09 | 0.96 | 1.30 | 1.55 | 1.66 | 1.75 |

The procedure was repeated with the teas infused at 90 degrees C but no duplicate measurements were made.

The results are given in Table 4 and Figure 2.

**Table 4**

| SAMPLE | Absorbance at 445 nm at time (sec) | | | | | |
|---|---|---|---|---|---|---|
| | 0 | 5 | 10 | 20 | 25 | 30 |
| Vending | 0.10 | 0.56 | 0.82 | 1.10 | 1.23 | 1.32 |
| Example A | 0.30 | 0.66 | 0.96 | 1.44 | 1.65 | 1.76 |
| Example 1 | -0.01 | 0.80 | 1.27 | 1.70 | 1.79 | 1.89 |

It is clear from the results of the infusions made at 80 °C and 90 °C that the fabricated leaf product made by the method of the present invention infused significantly faster and to a greater extent than both the commercially available vending leaf and the composite tea product made by the method described in GB 1428394.

The fabricated tea product made by the method of the present invention infused faster than both the tea product made by the method described in GB 1428394 and the commercially available vending leaf tea and provided an infusion with superior strength and tea quality.

## Claims

1. A method for preparing a fabricated leaf tea product comprising mixing leaf tea with tea solids derived from tea powders, the method being **characterised in that** the mixture of tea leaves and tea powder is simultaneously wetted and dried.

2. A method according to claim 1 wherein the amount of tea powder mixed with the leaf tea is between 10 and 75% of the weight of the leaf tea

3. A method according to any preceding claim wherein the fabricated leaf tea product is dried to 3 to 8% moisture

4. A method according to any preceding claim wherein the mixing of the leaf tea and the tea powder and the simultaneous wetting and drying are performed in a fluidised bed

5. A method according to claim 4 wherein the mixture of leaf tea and tea powder is wetted by spraying hot water on to the fluidised bed.

6. A method according to claim 5 wherein the hot water is at a temperature in the range 30 to 60°C

7. A method as claimed in claim 5 wherein the temperature of the fluidised bed is in the range 35 to 50°C

8. A method as claimed in claim 7 wherein the temperature of the fluidised bed is about 35°C

## Patentansprüche

1. Verfahren zur Herstellung eines verarbeiteten Blatt-Teeprodukts, umfassend Mischen von Blatt-Tee mit Teefeststoffen, die aus Teepulvern stammen, wobei das Verfahren **dadurch gekennzeichnet ist, dass** das Gemisch aus Teeblättern und Teepulver gleichzeitig benetzt und getrocknet wird.

2. Verfahren gemäß Anspruch 1, wobei die Menge an Teepulver, die mit dem Blatt-Tee gemischt wird, zwischen 10 und 75 % des Gewichts des Blatt-Tees ist.

3. Verfahren gemäß einem vorangehenden Anspruch, wobei das verarbeitete Blatt-Teeprodukt auf 3 bis 8 % Feuchtigkeit getrocknet wird.

4. Verfahren gemäß einem vorangehenden Anspruch, wobei das Mischen des Blatt-Tees und des Teepulvers und das gleichzeitige Benetzen und Trocknen in einem Fließbett durchgeführt werden.

5. Verfahren gemäß Anspruch 4, wobei das Gemisch aus Blatt-Tee und Teepulver benetzt wird, indem heißes Wasser auf das Fließbett gesprüht wird.

6. Verfahren gemäß Anspruch 5, wobei das heiße Wasser eine Temperatur im Bereich von 30 bis 60 °C hat.

7. Verfahren, wie es in Anspruch 5 beansprucht ist, wobei die Temperatur des Fließbetts im Bereich von 35 bis 50 °C ist.

8. Verfahren, wie es in Anspruch 7 beansprucht ist, wobei die Temperatur des Fließbetts etwa 35 °C ist.

## Revendications

1. Procédé de préparation d'un produit transformé de thé en feuilles comprenant le mélange de thé en feuilles avec de la matière sèche de thé dérivée de poudres de thé, le procédé étant **caractérisé en ce que** le mélange de feuilles de thé et de poudre de thé est simultanément mouillé et séché.

2. Procédé selon la revendication 1, dans lequel la quantité de poudre de thé mélangé avec le thé en feuilles est comprise entre 10 et 75 % du poids du thé en feuilles.

3. Procédé selon l'une quelconque des revendications précédentes, dans lequel le produit transformé de thé en feuilles est séché à 3 à 8 % d'humidité.

4. Procédé selon l'une quelconque des revendications précédentes, dans lequel le mélange du thé en feuilles et de la poudre de thé et le mouillage et le séchage simultanés sont effectués dans un lit fluidisé.

5. Procédé selon la revendication 4, dans lequel le mélange de thé en feuilles et de poudre de thé est mouillé par pulvérisation d'eau chaude sur le lit fluidisé.

6. Procédé selon la revendication 5, dans lequel l'eau chaude est à une température dans la gamme de 30 à 60°C.

7. Procédé selon la revendication 5, dans lequel la température du lit fluidisé dans la gamme de 35 à 50°C.

8. Procédé selon la revendication 7, dans lequel la température du lit fluidisé est d'environ 35°C.
